# EUROPEAN PATENT APPLICATION

(11) **EP 3 584 425 A1**
(43) Date of publication of application: **25.12.2019**
(21) Application number: 19172374.1
(22) Date of filing: 02.05.2019
(51) Int. Cl.: F02B 41/04, F02B 55/08, F02B 57/00, F02D 25/04, F02D 29/06, F02N 11/08, F01B 3/00, F02B 75/28, F01B 3/04, F01B 7/04, B60K 6/24, B60K 5/08, B60K 6/387, B60K 6/46, B60W 10/02, B60W 10/06, B60W 20/11, B60W 20/40, F02D 41/30

(54) **HYBRID VEHICLE**

(30) Priority: 11.06.2018 JP 2018111152
(71) Applicant: TOYOTA JIDOSHA KABUSHIKI KAISHA, Toyota-shi, Aichi-ken 471 8571 (JP)
(72) Inventor: TOMODA, Keiju, Aichi-ken, 471-8571 (JP)
(74) Representative: J A Kemp LLP

(57) **Abstract**

A hybrid vehicle HV is provided with an electric motor MT for generating vehicle drive force, an electrical generator GN for generating electric power to be supplied to the electric motor, a plurality of internal combustion engines EG1, EG2 for driving the generator, the plurality of internal combustion engines differing in output characteristics, and a controller CT configured to select one or more internal combustion engines from the plurality of internal combustion engines so that, when operating the selected one or more internal combustion engines in the respective high efficiency regions thereof, an engine output satisfies a required engine output and an engine operating efficiency is maximum, and to operate the selected one or more internal combustion engines in the respective high efficiency regions thereof.

## Description

### FIELD

The present disclosure relates to a hybrid vehicle.

### BACKGROUND

A series hybrid vehicle is known in the art, which is provided with an internal combustion engine, an electrical generator driven by the internal combustion engine, a battery, and an electric motor generating a vehicle drive force, wherein the electric motor is driven by electric power from at least one of the generator and battery (for example, see PTL 1). In PTL 1, when the remaining power of the battery is greater than a first predetermined value, an operation of the internal combustion engine is stopped and electric power from the battery is used to drive the electric motor. When the remaining power of the battery is smaller than the first predetermined value, the internal combustion engine is operated at a predetermined speed and thereby the generator is driven. At this time, part of the electric power generated by the generator is sent to the electric motor while the remainder is sent to the battery. In PTL 1, furthermore, when the remaining power of the battery is smaller than the first predetermined value and is greater than a third predetermined value (<first predetermined value), the internal combustion engine is operated at a predetermined speed in a range including a maximum efficiency point. As opposed to this, when the remaining power of the battery is smaller than the third predetermined value, the internal combustion engine is operated at an engine speed higher than the predetermined speed to increase the engine output. In general, if the engine speed is increased, the engine operating efficiency falls. Therefore, in PTL 1, the amount of increase of the engine speed is restricted so that the engine operating efficiency does not greatly fall.

### [CITATION LIST]

### [PATENT LITERATURE]

[PTL 1] Japanese Unexamined Patent Publication No. 2017-048727

### SUMMARY OF INVENTION

### [TECHNICAL PROBLEM]

However, the amount of increase of the engine speed being restricted means that the amount of increase of the engine output is restricted. For this reason, in PTL 1, it may be impossible to ensure the required engine output while maintaining the engine operating efficiency.

### [SOLUTION TO PROBLEM]

According to the present disclosure, there is provided a hybrid vehicle comprising: an electric motor for generating vehicle drive force; an electrical generator for generating electric power to be supplied to the electric motor; a plurality of internal combustion engines for driving the generator, the plurality of internal combustion engines differing in output characteristics; and a controller configured to select one or more internal combustion engines from the plurality of internal combustion engines so that, when operating the selected one or more internal combustion engines in respective high efficiency regions thereof, an engine output satisfies a required engine output and an engine operating efficiency is maximum, and to operate the selected one or more internal combustion engines in the respective high efficiency regions thereof.

### [ADVANTAGEOUS EFFECTS OF INVENTION]

It is possible to vary an engine output greatly while maintaining high engine operating efficiency.

### BRIEF DESCRIPTION OF DRAWINGS

FIG. 1 is a schematic overall view of a hybrid vehicle of an embodiment according to the present disclosure.
FIG. 2(A) is a graph showing one example of the output characteristics of a first internal combustion engine, FIG. 2(B) is a graph showing one example of the output characteristics of a second internal combustion engine, and FIG. 2(C) is a graph showing one example of the output characteristics when operating both the first internal combustion engine and the second internal combustion engine.
FIG. 3 is a graph showing an example of the output characteristics of a conventional internal combustion engine.
FIG. 4 is a time chart showing a fuel consumption rate etc. of a hybrid vehicle of the embodiment according to the present disclosure.
FIG. 5 is a flow chart for performing engine operation control routine of the embodiment according to the present disclosure.
FIG. 6 is a schematic overall perspective view of a rotary cylinder internal combustion engine of the embodiment according to the present disclosure.
FIG. 7 is a schematic disassembled view of a rotary cylinder internal combustion engine of the embodiment according to the present disclosure.
FIG. 8 is a schematic cross-sectional view along a rotational axis of a rotary cylinder internal combustion engine of the embodiment according to the present disclosure.
FIG. 9 is a schematic partial cross-sectional view along a rotational axis of a rotary cylinder internal combustion engine of the embodiment according to the present disclosure.
FIG. 10 is a schematic cross-sectional view along a symmetry plane of a rotary cylinder internal combustion engine of the embodiment according to the present disclosure.
FIG. 11 is a schematic perspective view of a piston of the embodiment according to the present disclosure.
FIG. 12 is a schematic enlarged view of a cam and follower of the embodiment according to the present disclosure.
FIG. 13 is a graph showing a behavior of a piston of the embodiment according to the present disclosure.
FIGS. 14(A) to 14(C) are schematic views of a rotary cylinder internal combustion engine of the embodiment according to the present disclosure in an intake stroke, wherein FIG. 14(A) is a cross-sectional view showing a positional relationship between communication holes and an intake hole etc., FIG. 14(B) is a side view showing a positional relationship between cams and followers, and FIG. 14(C) is a side view showing a positional relationship between slots and followers.
FIGS. 15(A) to 15(C) are schematic views of a rotary cylinder internal combustion engine of the embodiment according to the present disclosure in a compression stroke, wherein FIG. 15(A) is a cross-sectional view showing a positional relationship between communication holes and an intake hole etc., FIG. 15(B) is a side view showing a positional relationship between cams and followers, and FIG. 15(C) is a side view showing a positional relationship between slots and followers.
FIGS. 16(A) to 16(C) are schematic views of a rotary cylinder internal combustion engine of the embodiment according to the present disclosure when a rotational angle of a cylinder is in an ignition angle range, wherein FIG. 16(A) is a cross-sectional view showing a positional relationship between communication holes and an intake hole etc., FIG. 16(B) is a side view showing a positional relationship between cams and followers, and FIG. 16(C) is a side view showing a positional relationship between slots and followers.
FIG. 17 is a schematic view of a rotary cylinder internal combustion engine of the embodiment according to the present disclosure when a rotational angle of a cylinder is in an ignition angle range and a side view showing a positional relationship between notches of a piston, communication holes, and a spark plug.
FIGS. 18(A) to 18(C) are schematic views of a rotary cylinder internal combustion engine of the embodiment according to the present disclosure in an expansion stroke, wherein FIG. 18(A) is a cross-sectional view showing a positional relationship between communication holes and an intake hole etc., FIG. 18(B) is a side view showing a positional relationship between cams and followers, and FIG. 18(C) is a side view showing a positional relationship between slots and followers.
FIGS. 19(A) to 19(C) are schematic views of a rotary cylinder internal combustion engine of the embodiment according to the present disclosure in an exhaust stroke, wherein FIG. 19(A) is a cross-sectional view showing a positional relationship between communication holes and an intake hole etc., FIG. 19(B) is a side view showing a positional relationship between cams and followers, and FIG. 19(C) is a side view showing a positional relationship between slots and followers.
FIG. 20 is a schematic view showing a rotary cylinder internal combustion engine of the embodiment according to the present disclosure in an expansion stroke.
FIG. 21 is a schematic view showing a rotary cylinder internal combustion engine of the embodiment according to the present disclosure in a compression stroke and exhaust stroke.
FIG. 22 is a schematic view showing a rotary cylinder internal combustion engine of the embodiment according to the present disclosure in an intake stroke.
FIG. 23 is a schematic cross-sectional view along a rotational axis of a rotary cylinder internal combustion engine of another embodiment according to the present disclosure.
FIGS. 24(A) and 24(B) are schematic views showing another embodiment of a follower, wherein FIG. 24(A) is a partial cross-sectional view along a rotational axis and FIG. 24(B) is a cross-sectional view along a line B-B shown in FIG. 24(A).
FIGS. 25(A) and 25(B) are schematic views showing another embodiment of a cam and follower, wherein FIG. 25(A) is a partial cross-sectional view along a rotational axis and FIG. 25(B) is a cross-sectional view along a line BB-BB shown in FIG. 25(A).
FIG. 26 is a graph showing a behavior of a piston of another embodiment according to the present disclosure.
FIG. 27 is a schematic view showing an embodiment of arrangement of a plurality of internal combustion engines.
FIG. 28 is a schematic overall view of a hybrid vehicle of another embodiment of the present disclosure.
FIG. 29 is a schematic overall view of a hybrid vehicle of still another embodiment of the present disclosure.
FIG. 30 is a schematic overall view of a hybrid vehicle of still another embodiment of the present disclosure.
FIG. 31 is a schematic overall view of a hybrid vehicle of still another embodiment of the present disclosure.
FIG. 32 is a schematic overall view of a hybrid vehicle of still another embodiment of the present disclosure.

### DESCRIPTION OF EMBODIMENTS

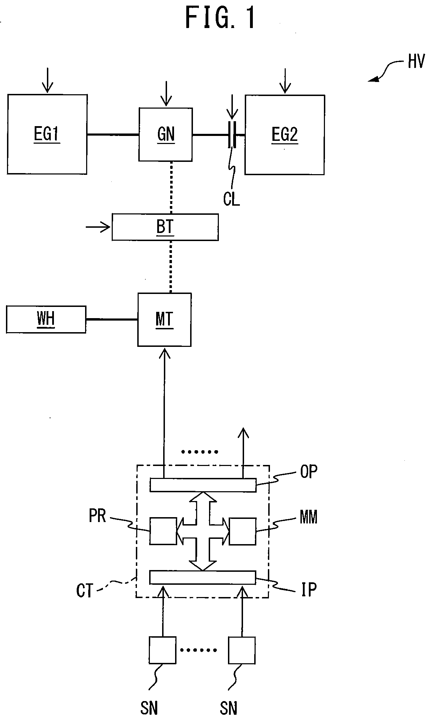

FIG. 1 schematically shows a hybrid vehicle HV of an embodiment according to the present disclosure. Note that, in FIG. 1, solid lines show mechanical connection, while dot lines show electrical connections. Referring to FIG. 1, the hybrid vehicle HV of the embodiment according to the present disclosure is provided with an electric motor MT for generating vehicle drive force. An output shaft of this electric motor MT is connected to vehicle wheels WH.

The hybrid vehicle HV of the embodiment according to the present disclosure is further provided with an electrical generator GN for generating electric power to be supplied to the electric motor MT. In the embodiment according to the present disclosure, the generator GN is connected through a battery BT to the electric motor MT.

The hybrid vehicle HV of the embodiment according to the present disclosure is further provided with a plurality of internal combustion engines for driving the generator GN. In the embodiment according to the present disclosure, the plurality of internal combustion engines include a first internal combustion engine EG1 and a second internal combustion engine EG2. Further, in the embodiment according to the present disclosure, an output shaft of the first internal combustion engine EG1 is directly connected to an input shaft of the generator GN, while an output shaft of the second internal combustion engine EG2 is connected to the input shaft of the generator GN through an electromagnetic clutch CL.

When the first internal combustion engine EG1 is operated, the generator GN is driven by the first internal combustion engine EG1. Further, when the second internal combustion engine EG2 is operated with the clutch CL being turned ON, the generator GN is driven by the second internal combustion engine EG2. The electric power generated by the generator GN is sent to the battery BT. On the other hand, when the hybrid vehicle HV should be driven, electric power is sent from the battery BT to the electric motor MT and the electric motor MT is operated. That is, the hybrid vehicle HV of the embodiment according to the present disclosure is configured by a series hybrid vehicle. In this case, when an amount of electric power consumed by the electric motor MT is smaller than an amount of electric power sent from the generator GN to the battery BT, in one example, an excess electric power is stored in the battery BT. In another example, the internal combustion engines EG1, EG2 are intermittently operated. As opposed to this, when an amount of electric power consumed by the electric motor MT is greater than an amount of electric power sent from the generator GN to the battery BT, stored electric power is sent from the battery BT to the electric motor MT.

Furthermore, referring to FIG. 1, the hybrid vehicle HV of the embodiment according to the present disclosure is provided with a controller CT or electronic control unit. This controller CT is comprised of a digital computer provided with a processor PR, memory MM, input port IP, and output port OP, which are mutually connected. One or more sensors SN are connected to the input port IP. The one or more sensors SN include, for example, sensors detecting an operating states of the internal combustion engines EG1, EG2 (rotational angles, throttle opening degrees, etc.), a sensor detecting a state of charge SOC of the battery BT (for example, remaining charged power of the battery compared with the fully charged power of the battery), a sensor detecting an amount of depression of an accelerator pedal (not shown), etc. Note that, the amount of depression of the accelerator pedal expresses a required vehicle load. On the other hand, the output port OP is connected to one or more control targets. The one or more control targets include, for example, the internal combustion engines EG1, EG2 (for example, fuel injectors, spark plugs, throttle valves, etc.), clutch CL, electric motor MT, etc. Various controls are performed by running programs stored in the memory MM of the controller CT at the processor PR of the controller CT.

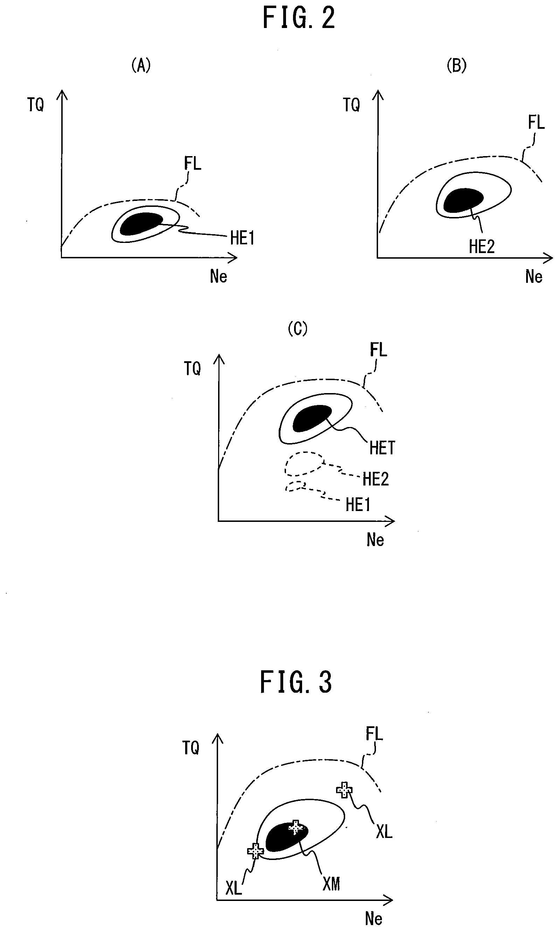

FIG. 2(A) shows one example of the output characteristics of the first internal combustion engine EG1, while FIG. 2(B) shows one example of the output characteristics of the second internal combustion engine EG2. In the example shown in FIG. 2(A) and FIG. 2(B), the output characteristics of the internal combustion engines are shown by relationships of operating points of the internal combustion engines (for example, torque TQ and engine speed Ne) and a fuel consumption rate or engine operating efficiency at the corresponding operating point. The darker the color of the region, the smaller the fuel consumption rate in that region, that is, the higher the engine operating efficiency. Note that FL shows full load.

HE1 in FIG. 2(A) shows a high efficiency region of the first internal combustion engine EG1. The high efficiency region HE1 of the first internal combustion engine EG1 is a region where an engine operating efficiency is relatively high in a region to which an operating point of the first internal combustion engine EG1 may belong and, for example, a region where the engine operating efficiency is higher than a predetermined first set value. Similarly, in FIG. 2(B), HE2 shows a high efficiency region of the second internal combustion engine EG2. The high efficiency region HE2 of the second internal combustion engine EG2 is a region where an engine operating efficiency is relatively high in a region to which an operating point of the second internal combustion engine EG2 may belong to and, for example, a region where the engine operating efficiency is higher than a predetermined second set value.

Referring further to FIG. 2(A) and FIG. 2(B), in the embodiment according to the present disclosure, the output characteristics of the first internal combustion engine EG1 and the output characteristics of the second internal combustion engine EG2 differ from each other. Specifically, the torque TQ or output obtained when operating the first internal combustion engine EG1 in the high efficiency region HE1 thereof is lower than the torque TQ or output obtained when obtaining the second internal combustion engine EG2 in the high efficiency region HE2 thereof, while the engine operating efficiency obtained when operating the first internal combustion engine EG1 in the high efficiency region HE1 thereof is higher than the engine operating efficiency obtained when operating the second internal combustion engine EG2 in the high efficiency region HE2 thereof. In other words, the first internal combustion engine EG1 of the embodiment according to the present disclosure is designed for engine operating efficiency and may be referred to as an "efficiency type internal combustion engine". On the other hand, the second internal combustion engine EG2 of the embodiment according to the present disclosure is designed for output and may be referred to as an "output type internal combustion engine".

FIG. 2(C) shows the output characteristics of the internal combustion engine as a whole when operating both the above-mentioned first internal combustion engine EG1 and second internal combustion engine EG2. HET in FIG. 2(C) shows a region to which operating points of the internal combustion engine as a whole belong when operating the first internal combustion engine EG1 in the high efficiency region HE1 thereof and operating the second internal combustion engine EG2 in the high efficiency region HE2 thereof. Further, in FIG. 2(C), broken lines show the high efficiency region HE1 of the first internal combustion engine EG1 and the high efficiency region HE2 of the second internal combustion engine EG2.

As will be understood from FIG. 2(C), when operating the second internal combustion engine EG2 in the high efficiency region HE2 thereof while stopping an operation of the first internal combustion engine EG1, the output of the internal combustion engine as a whole is increased, compared to when operating the first internal combustion engine EG1 in the high efficiency region HE1 thereof while stopping an operation of the second internal combustion engine EG2. When operating the first internal combustion engine EG1 in the high efficiency region HE1 thereof and operating the second internal combustion engine EG2 in the high efficiency region HE2 thereof, the output of the internal combustion engine as a whole is further increased. Further, when operating the second internal combustion engine EG2 in the high efficiency region HE2 thereof while stopping an operation of the first internal combustion engine EG1, the operating efficiency of the internal combustion engine as a whole is increased, compared to when operating the second internal combustion engine EG2 in the high efficiency region HE2 in the high efficiency region HE2 thereof while operating the first internal combustion engine EG1 in the high efficiency region HE1 thereof. When operating the first internal combustion engine EG1 in the high efficiency region HE1 thereof while stopping an operation of the second internal combustion engine EG2, the operating efficiency of the internal combustion engine as a whole is further increased.

Now then, in the hybrid vehicle HV of the embodiment according to the present disclosure, when the electric motor MT should be driven, one or both of the internal combustion engines EG1, EG2 are operated. As a result, the generator GN is driven and the electric power generated at this time is sent through the battery BT to the electric motor MT. An operating control of the internal combustion engines EG1, EG2 of the embodiment according to the present disclosure is, for example, performed as follows. That is, when a required engine output is lower than the output obtained when operating the first internal combustion engine EG1 in the high efficiency region HE1 thereof, the first internal combustion engine EG1 is operated in the high efficiency region HE1 thereof while an operation of the second internal combustion engine EG2 is stopped. On the other hand, when the required engine output is higher than the output obtained when the first internal combustion engine EG1 is operated in the high efficiency region HE1 thereof, in the embodiment according to the present disclosure, the first internal combustion engine EG1 is operated in the high efficiency region HE1 thereof while the second internal combustion engine EG2 is operated in the high efficiency region HE2 thereof. As a result, it is possible to maintain the engine operating efficiency high while securing the required engine output, regardless of the required engine output.

FIG. 3 shows an example of an output characteristics of a conventional, general internal combustion engine. In FIG. 3 as well, the darker the color of the region, the higher the engine operating efficiency in that region. In the internal combustion engine shown in FIG. 3, when a required engine output is relatively small, the engine is operated at the operating point XL. When the required engine output is relatively large, the engine is operated at the operating point XH. When the required engine output is a medium extent, the engine is operated at the operating point XM. Therefore, when trying to maintain the required engine output, it is difficult to maintain the engine operating efficiency high.

On this point, in the embodiment according to the present disclosure, when the required engine output is relatively small, the first internal combustion engine EG1 is selected as an internal combustion engine to be operated. In this case, even if the second internal combustion engine EG2 is selected or both of the first internal combustion engine EG1 and the second internal combustion engine EG2 are selected, it is possible to secure the required engine output. However, by selecting the first internal combustion engine EG1 and operating it in the high efficiency region HE1 thereof, it is possible to maximize the operating efficiency of the internal combustion engine as a whole. On the other hand, when the required engine output is large, both of the first internal combustion engine EG1 and the second internal combustion engine EG2 are selected and they are operated in the respective high efficiency regions HE1, HE2 thereof. As a result, it is possible to maintain the engine operating efficiency high while securing the required engine output.

Therefore, generally speaking, the controller CT is configured to select one or more internal combustion engines from the plurality of internal combustion engines so that, when operating the selected one or more internal combustion engines in respective high efficiency regions thereof, an engine output satisfies a required engine output and an engine operating efficiency is maximum, and to operate the selected one or more internal combustion engines in the respective high efficiency regions thereof.

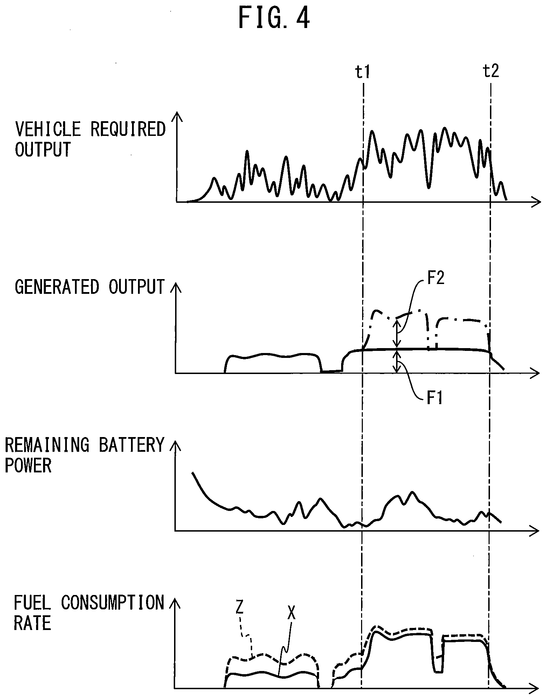

FIG. 4 is a time chart showing a fuel consumption rate etc. of the hybrid vehicle HV of the embodiment according to the present disclosure. In the example shown in FIG. 4, up to the time t1, a mean value over time of a vehicle required output is relatively small, and the first internal combustion engine EG1 is operated while an operation of the second internal combustion engine EG2 is stopped. Next, at the time t1, when the mean value over time of the vehicle required output becomes relatively large, both of the first internal combustion engine EG1 and the second internal combustion engine EG2 are operated. Next, at the time t2, when the mean value over time of the vehicle required output becomes relatively small, an operation of the second internal combustion engine EG2 is stopped while the first internal combustion engine EG1 is kept operating. Note that, in FIG. 4, F1 shows an amount of contribution of the first internal combustion engine EG1, while F2 shows an amount of contribution of the second internal combustion engine EG2. Further, a solid line X shows a fuel consumption rate or engine operating efficiency of the hybrid vehicle HV of the embodiment according to the present disclosure, while a broken line Z shows a fuel consumption rate or engine operating efficiency of a hybrid vehicle provided with the conventional internal combustion engine having the output characteristics shown in FIG. 3. As shown in FIG. 4, in the embodiment according to the present disclosure, it is possible to improve the fuel consumption rate or engine operating efficiency regardless of the output.

Note that, in the embodiment according to the present disclosure, if the SOC of the battery BT is larger than a predetermined set value when the electric motor MT should be driven, the electric power stored in the battery BT is sent to the electric motor MT while operations of the internal combustion engines EG1, EG2 are stopped. In other words, if the SOC of the battery BT is smaller than the set value when the electric motor MT should be driven, one or more internal combustion engines EG1, EG2 are operated.

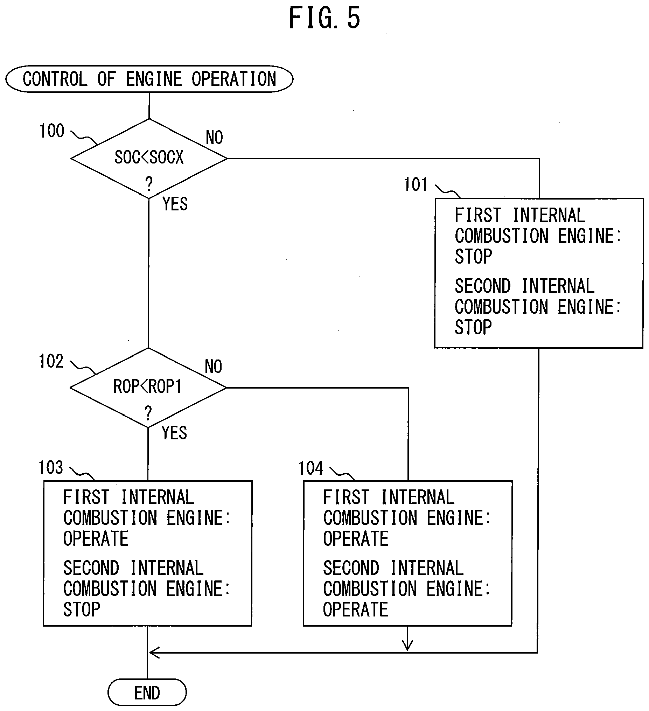

FIG. 5 shows a routine for performing control of engine operation of the above-mentioned embodiment according to the present disclosure. Referring to FIG. 5, at step 100, it is judged if the SOC of the battery BT is smaller than a predetermined set value SOCX. If SOC≥SOCX, the routine then proceeds to step 101 where operations of both of the first internal combustion engine EG1 and the second internal combustion engine EG2 are stopped. As opposed to this, if SOC<SOCX, the routine then proceeds to step 102 where it is judged if the required engine output ROP is smaller than an output ROP1 obtained when the first internal combustion engine EG1 is operated in the high efficiency region HE1 thereof. When ROP<ROP1, next the routine proceeds to step 103 where the second internal combustion engine EG2 is operated in the high efficiency region HE2 thereof while an operation of the first internal combustion engine EG1 is stopped. As opposed to this, when ROP≥ROP1, next the routine proceeds to step 104 where the first internal combustion engine EG1 is operated in the high efficiency region HE1 thereof and the second internal combustion engine EG2 is operated in the high efficiency region HE2 thereof.

In the embodiment according to the present disclosure, the required engine output is secured by totaling up the outputs of the one or plurality of internal combustion engines. As a result, it is possible to make the internal combustion engines more compact. Further, by doing this, it is possible to shorten warm-up times of the internal combustion engines. Furthermore, by sending an exhaust heat of the already operating internal combustion engine/engines to the other internal combustion engine/engines, it is further possible to shorten the warm-up times of the other internal combustion engine/engines.

Further, in the embodiment according to the present disclosure, the plurality of internal combustion engines are respectively operated in the high efficiency regions thereof. As a result, measures against vibration and measures against noise suitable for the respective operating regions or internal combustion engines can be individually devised. As opposed to this, if a single internal combustion engine is operated in various operating regions, it is necessary to devise pluralities of measures against vibration and measures against noise suitable respectively for the various operating regions. This is extremely difficult.

In this regard, if viewed from the viewpoint of the output characteristics, in one example, the plurality of internal combustion engines include an internal combustion engine configured to perform a mirror cycle and an internal combustion engine configured to perform an Otto cycle. The former is an example of the first internal combustion engine EG1 or efficiency type internal combustion engine, while the latter is one example of the second internal combustion engine EG2 or output type internal combustion engine.

In another example, the plurality of internal combustion engines include an internal combustion engine configured to perform HCCI (homogeneous charge compression ignition) combustion and an internal combustion engine configured to perform SI (spark ignition) combustion. The former is an example of the first internal combustion engine EG1 or efficiency type internal combustion engine, while the latter is one example of the second internal combustion engine EG2 or output type internal combustion engine.

Furthermore, in another example, the plurality of internal combustion engines include an internal combustion engine configured to perform PCCI (premixed charge compression ignition) combustion and an internal combustion engine configured to perform CI (compression ignition) combustion. The former is an example of the first internal combustion engine EG1 or efficiency type internal combustion engine, while the latter is one example of the second internal combustion engine EG2 or output type internal combustion engine.

Furthermore, in another example, the plurality of internal combustion engines include a long stroke internal combustion engine with a stroke length larger than a bore size thereof, and a short stroke internal combustion engine with a bore size larger than a stroke length thereof. The former is one example of the first internal combustion engine EG1 or efficiency type internal combustion engine, while the latter is one example of the second internal combustion engine EG2 or output type internal combustion engine.

Furthermore, in another example, the plurality of internal combustion engines include an internal combustion engine with a relatively high mechanical compression ratio and an internal combustion engine with a relatively low mechanical compression ratio. The former is one example of the first internal combustion engine EG1 or efficiency type internal combustion engine, while the latter is one example of the second internal combustion engine EG2 or output type internal combustion engine.

In this regard, there is known an internal combustion engine able to change output characteristics. This internal combustion engine includes, for example, an internal combustion engine switching the combustion cycle between a mirror cycle and an Otto cycle and an internal combustion engine switching combustion between HCCI combustion and SI combustion. As opposed to this, in the embodiment according to the present disclosure, the internal combustion engine cannot change the output characteristics. As a result, a configuration enabling change of the output characteristics, for example, a variable valve operation mechanism etc., is not necessary. Therefore, the configuration of the internal combustion engine can be simplified more. Further, it is possible to eliminate a torque fluctuation or deterioration in exhaust emission which may occur when switching output characteristics.

On the other hand, if viewed from the viewpoint of the number of cylinders, in one example, the plurality of internal combustion engines include a single-cylinder internal combustion engine. In another example, all of the plurality of internal combustion engines are single-cylinder internal combustion engines. This makes a hybrid vehicle HV more compact. Furthermore, in another embodiment, the plurality of internal combustion engines include a multiple cylinder internal combustion engine.

On the other hand, if viewed from the viewpoint of power conversion, in one example, the plurality of internal combustion engines include a crank internal combustion engine which converts reciprocating motion of a piston to rotary motion by a crank mechanism and outputs the same. In another example, all of the plurality of internal combustion engines are crank internal combustion engines.

Furthermore, in another example, the plurality of internal combustion engines include a rotary cylinder internal combustion engine. Furthermore, in another example, all of the plurality of internal combustion engines are rotary cylinder internal combustion engines.

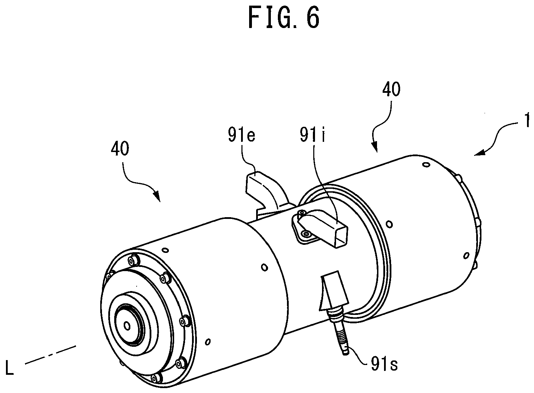

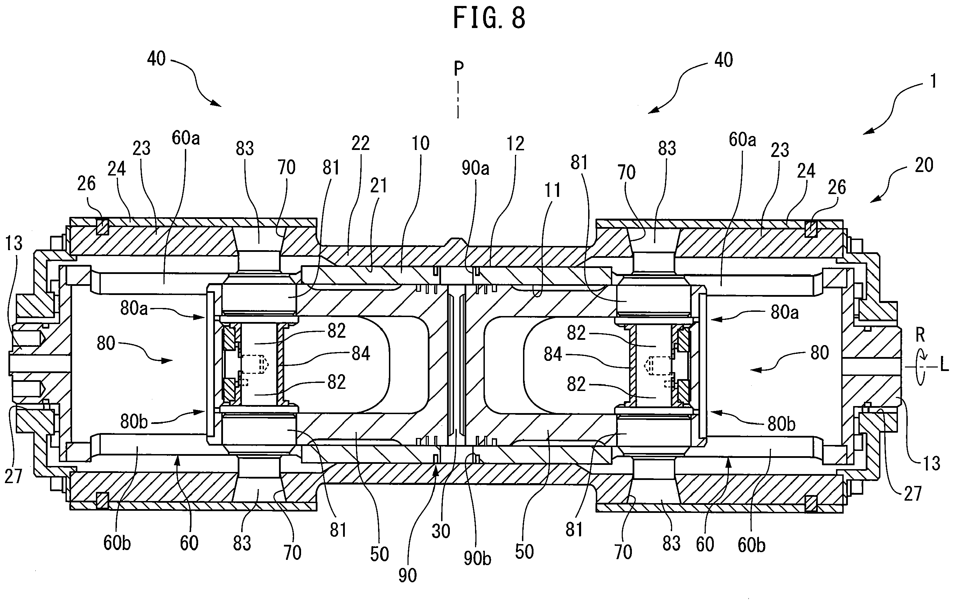

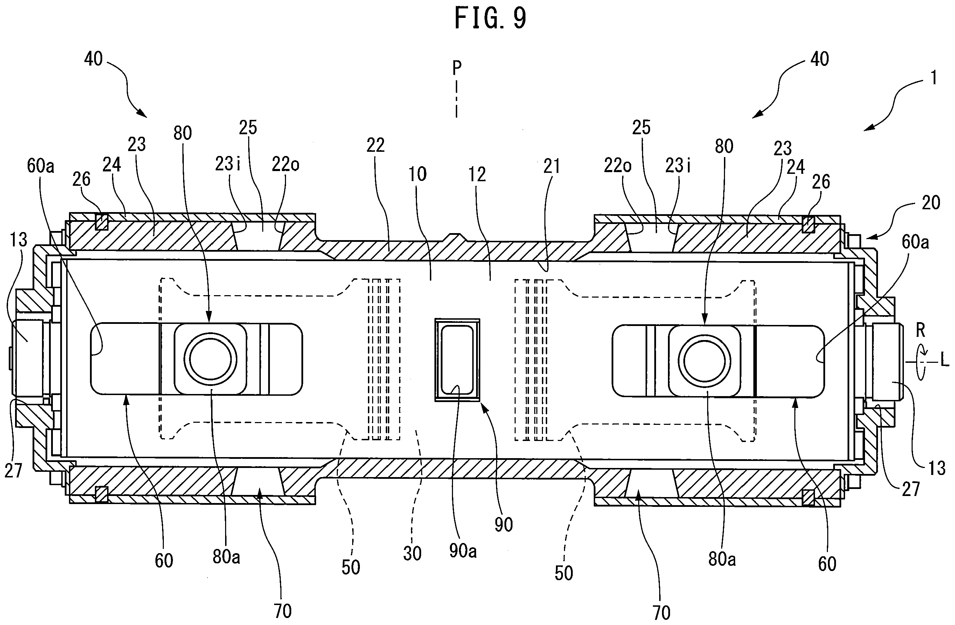

FIG. 6 to FIG. 12 show a rotary cylinder internal combustion engine 1 of the embodiment according to the present disclosure. This rotary cylinder internal combustion engine 1 overall has a cylindrical shape or columnar shape having a longitudinal center axis (for example, see FIGS. 6, 8, and 9). This longitudinal center axis matches with a rotational axis L which will be explained later. Further, the rotary cylinder internal combustion engine 1 of the embodiment according to the present disclosure is formed substantially symmetrically with respect to a symmetry plane P vertical to the rotational axis L (for example, see FIGS. 8 and 9).

The rotary cylinder internal combustion engine 1 of the embodiment according to the present disclosure is a four-stroke engine. In another embodiment according to the present disclosure (not shown), the rotary cylinder internal combustion engine 1 is a two-stroke engine. On the other hand, in the internal combustion engine 1 of the embodiment according to the present disclosure, SI (spark ignition) combustion is performed. In an internal combustion engine of another embodiment according to the present disclosure (not shown), CI (compression ignition) combustion, HCCI (homogeneous charge compression ignition) combustion or PCCI (premixed charge compression ignition) combustion is performed. As fuel, a liquid fuel such as gasoline, diesel fuel, or alcohol, or a gaseous fuel such as liquefied petroleum gas (LPG), compressed natural gas (CNG), or hydrogen, is used.

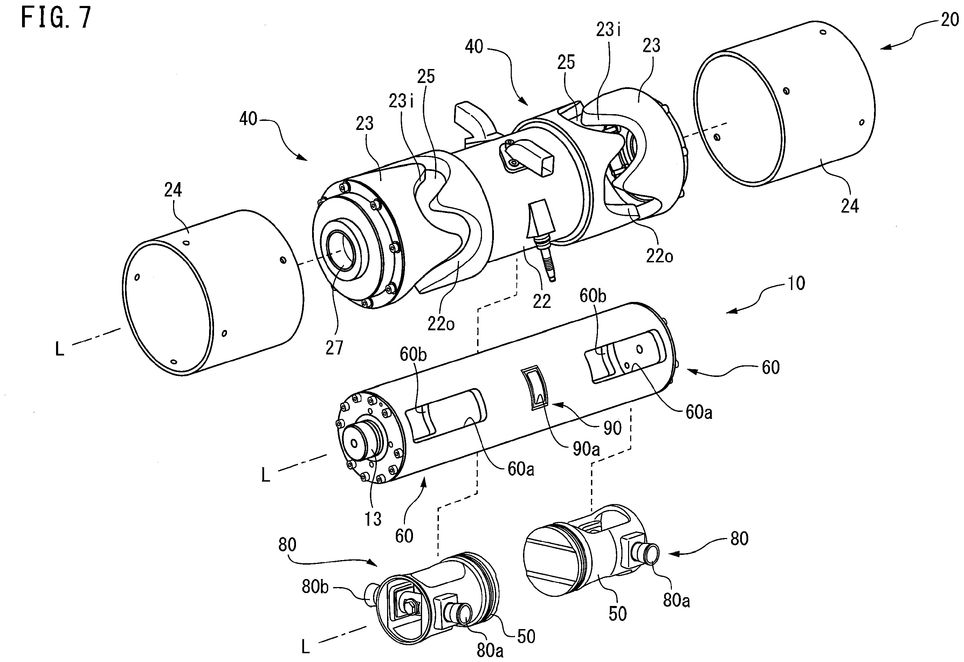

The rotary cylinder internal combustion engine 1 of the embodiment according to the present disclosure is provided with a single cylinder 10 able to rotate about the rotational axis L (for example, see FIGS. 7 to 9). The cylinder 10 overall has a hollow, cylindrical shape. Longitudinal center axes of an inner circumferential surface 11 having a cylindrical shape and an outer circumferential surface 12 having a cylindrical shape of the cylinder 10 respectively match the rotational axis L. In the embodiment according to the present disclosure, the cylinder 10 can rotate in an R direction (for example, see FIGS. 8 and 9).

The rotary cylinder internal combustion engine 1 of the embodiment according to the present disclosure is further provided with an outer circumferential member 20 (for example, see FIGS. 7 to 9). This outer circumferential member 20 overall has a hollow, cylindrical shape. A longitudinal center axis of an inner circumferential surface 21 having a cylindrical shape of the outer circumferential member 20 matches with the rotational axis L. The above-mentioned cylinder 10 is housed in this outer circumferential member 20 to be able to rotate about the rotational axis L, therefore the outer circumferential member 20 is positioned around the cylinder 10. On the other hand, the outer circumferential member 20 of the embodiment according to the present disclosure is stationarily set. That is, the outer circumferential member 20 is set or mounted to be unable to rotate about the rotational axis L and to be unable to move in the rotational axis L direction.

The outer circumferential member 20 of the embodiment according to the present disclosure is comprised of a plurality of members. Specifically, the outer circumferential member 20 is provided with a center part 22, two end parts 23, 23, and two housings 24, 24 (for example, see FIGS. 7 to 9). The center part 22 has a hollow, cylindrical shape with open opposite ends in the rotational axis L direction, and is arranged on the symmetry plane P. The end parts 23, 23 respectively have hollow, cylindrical shapes with closed outside ends in the rotational axis L direction and open inside ends in the rotational axis L direction, and are arranged with spaces 25 from the center part 22 in the rotational axis L direction (for example, see FIGS. 7 and 9). The spaces 25 have annular shapes in the circumferential direction about the rotational axis L. The housings 24, 24 have hollow, cylindrical shapes with open opposite ends in the rotational axis L direction, and are fixed to the center part 22 and the corresponding end parts 23, 23 by for example bolts 26, 26 (for example, see FIGS. 8 and 9). As a result, the center part 22 and the end parts 23, 23 are connected to each other by the housings 24, 24 and the spaces 25, 25 are separated from the outside by the housings 24, 24. In this case, the inner circumferential surface 21 of the outer circumferential member 20 is comprised of an inner circumferential surface of the center part 22 and inner circumferential surfaces of the end parts 23, 23. In another embodiment (not shown), the outer circumferential member 20 is comprised of an integral member.

In the embodiment according to the present disclosure, the cylinder 10 is housed in the outer circumferential member 20 so that the outer circumferential surface 12 of the cylinder 10 slides with respect to the inner circumferential surface of the center part 22 (for example, see FIGS. 8 and 9). Further, projecting parts 13, 13, which are provided respectively at two ends in the rotational axis L direction of the cylinder 10, are held to be able to rotate about the rotational axis L, in corresponding through holes 27, 27, which are provided at two ends in the rotational axis L direction of the outer circumferential member 20 (for example, see FIG. 7 to 9). In this way, the cylinder 10 is held by the outer circumferential member 20 to be able to rotate about the rotational axis L. Note that, in the embodiment according to the present disclosure, the outer circumferential surface 12 of the cylinder 10 and the inner circumferential surfaces of the end parts 23, 23 are separated from each other. Further, in the embodiment according to the present disclosure, an output shaft (not shown) is connected to one projecting part 13.

The rotary cylinder internal combustion engine 1 of the embodiment according to the present disclosure is further provided with a single combustion chamber 30 defined inside the cylinder 10 (for example, see FIGS. 8 and 9). This combustion chamber 30 is positioned on the symmetry plane P.

The rotary cylinder internal combustion engine 1 of the embodiment according to the present disclosure is further provided with two drive parts 40, 40 arranged along the rotational axis L (for example, see FIGS. 6 to 9).

The drive parts 40, 40 of the embodiment according to the present disclosure are respectively provided with single pistons 50 (for example, see FIGS. 7 to 9). The pistons 50 are housed in the cylinder 10 to be able to slide in the rotational axis L direction. In this case, the piston 50 of one drive part 40 and the piston 50 of the other drive part 40 face each other inside the cylinder 10. The above-mentioned combustion chamber 30 is defined between these pistons 50, 50 in the cylinder 10. Note that, longitudinal center axes of the pistons 50 match the rotational axis L.

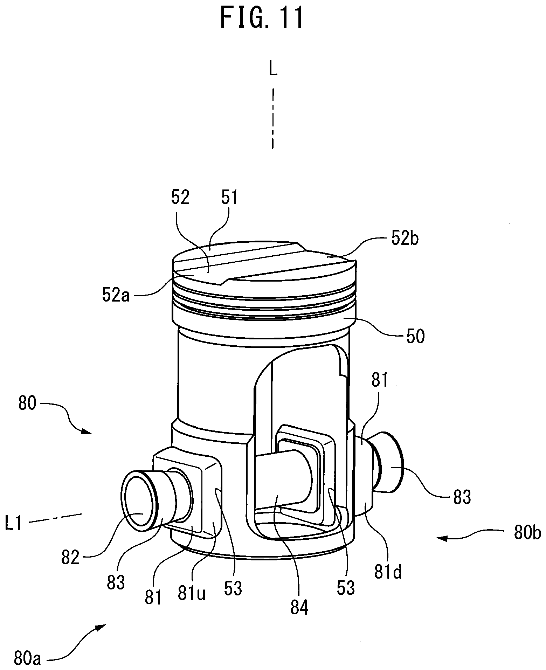

In the embodiment according to the present disclosure, recessed parts 52 are formed in top surfaces 51 of the pistons 50 (for example, see FIG. 11). The recessed parts 52 extend in diametrical directions of the pistons 50 and reach circumferential surfaces of the pistons 50. As a result, at the circumferential surfaces of the pistons 50 adjoining the top surfaces 51 of the pistons 50, two notches 52a, 52b are formed separated by 180 degrees in the circumferential direction about the rotational axis L. Further, in the embodiment according to the present disclosure, the recessed part 52 of one piston 50 and the recessed part 52 of the other piston 50 are aligned to each other in the circumferential direction about the rotational axis L. Therefore, the notches 52a, 52b of one piston 50 and the notches 52a, 52b of the other piston 50 are also aligned to each other in the circumferential direction about the rotational axis L.

Further, the drive parts 40, 40 of the embodiment according to the present disclosure are respectively further provided with pluralities of slots 60 which are formed in a circumferential surface of the cylinder 10 separated at equal intervals in the circumferential direction about the rotational axis L (for example, see FIGS. 7 to 9). In the embodiment according to the present disclosure, the slots 60 comprise two slots 60a, 60b separated from each other by 180 degrees in the circumferential direction about the rotational axis L. The slots 60a, 60b are respectively formed in the circumferential surface of the cylinder 10 at the opposite sides to the combustion chamber 30 relative to the pistons 50 (for example, see FIGS. 7 to 9). That is, the combustion chamber 30 is positioned at the inner side in the rotational axis L direction with respect to the pistons 50, while the slots 60a, 60b are positioned at the outer sides in the rotational axis L direction with respect to the pistons 50. Note that the slots 60a, 60b are aligned in the rotational axis L direction.

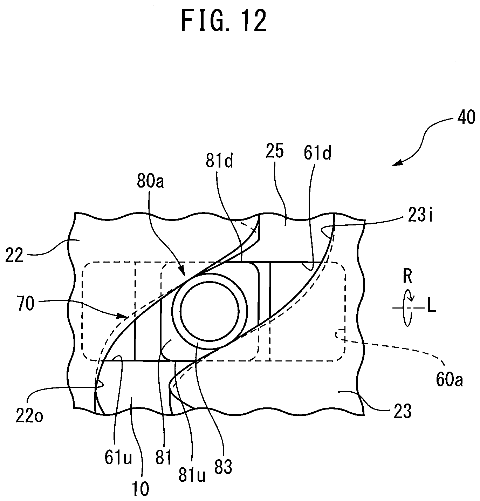

The slots 60a, 60b of the embodiment according to the present disclosure respectively have rectangular shapes elongated in the rotational axis L direction and are provided with two engaging surfaces 61u, 61d separated from each other in the circumferential direction about the rotational axis L and extending in the rotational axis L direction (for example, see FIGS. 9 and 12). In this case, the engaging surfaces 61u are positioned at upstream sides in the rotational direction R about the rotational axis L while the engaging surfaces 61d are positioned at downstream sides.

The drive parts 40, 40 of the embodiment according to the present disclosure are respectively provided with single cams 70 (for example, see FIGS. 8 and 9). The cams 70 are stationarily set around the slots 60. Further, the cams 70 have profiles oscillating in the rotational axis L direction while being annular in the circumferential direction about the rotational axis L. Furthermore, in the embodiment according to the present disclosure, the profiles of the cams 70, 70 are respectively formed so that the pistons 50, 50 of the two drive parts 40, 40 are synchronized to each other.

In the embodiment according to the present disclosure, the cams 70 are comprised of groove cams. Specifically, the cams 70 are provided with outside end faces 22o of the center parts 22 in the rotational axis L direction, inside end faces 23i of the end parts 23 in the rotational axis L direction, and the spaces 25 of the outer circumferential members 20 defined by these end faces 22o, 23i (for example, see FIGS. 8, 9, and 12). These end faces 22o, 23i function as cam faces of the cams 70. In this case, the cams 70 may be held by the outer circumferential members 20. Further, the cam 70 of one drive part 40 and the cam 70 of the other drive part 40 may be held by the common outer circumferential member 20.

The drive parts 40, 40 of the embodiment according to the present disclosure are respectively provided with pluralities of followers 80 which are provided integrally with the pistons 50 and separated at equal intervals in the circumferential direction about the rotational axis L (for example, see FIGS. 7 to 9). In the followers 80 of the embodiment according to the present disclosure, the followers 80 comprise two followers 80a, 80b separated from each other by 180 degrees in the circumferential direction about the rotational axis L. Note that the followers 80a, 80b are aligned to each other in the rotational axis L direction. The followers 80a, 80b respectively extend from the pistons 50 through the slots 60a, 60b to the cams 70, and are configured to move along the profiles of the cams 70 (for example, see FIGS. 8 and 9).

Specifically, the followers 80a, 80b of the embodiment according to the present disclosure respectively are provided with sliders 81, arms 82, and rollers 83 (for example, see FIGS. 8, 9, and 11). The sliders 81 are fit into through holes 53 formed in circumferential walls of the pistons 50. Further, the sliders 81 have two engaging surfaces 81u, 81d extending in the rotational axis L direction. On the other hand, the arms 82 extend through the sliders 81 outward in a radial direction. In the embodiment according to the present disclosure, the arms 82 of the followers 80a and the arms 82 of the other followers 80b are integrally formed. At tips of the arms 82, rollers 83 are attached to be able to rotate about a longitudinal center axis L1 of the arms 82. The followers 80a, 80b are fastened by fastening sleeves 84 to the pistons 50.

In an assembled state (for example, see FIGS. 8, 9, and 12), the rollers 83 engage with the cams 70. That is, circumferential surfaces of the rollers 83 abut against the cam faces 22o, 23i of the cams 70. As a result, the followers 80a, 80b can move together with the pistons 50 along the profiles of the cams 70.

Further, in an assembled state (for example, see FIGS. 8, 9, and 12), the sliders 81, 81 are housed in the slots 60a, 60b. As a result, the engaging surfaces 81u of the sliders 81 engage with the engaging surfaces 61u of the slots 60a, 60b and the engaging surfaces 81d of the sliders 81 engage with the engaging surfaces 61d of the slots 60a, 60b. For this reason, the sliders 81 are restricted from relative movement with respect to the cylinder 10 in the circumferential direction about the rotational axis L by the slots 60a, 60b. This means that rotation of the followers 80a, 80b about the rotational axis L causes rotation of the cylinder 10 together with the followers 80a, 80b about the rotational axis L, and that rotation of the cylinder 10 about the rotational axis L causes rotation of the followers 80a, 80b together with the cylinder 10 about the rotational axis L. On the other hand, the sliders 81 are allowed to move relative to the cylinder 10 in the rotational axis L direction. That is, the slots 60 of the embodiment according to the present disclosure are configured to restrict relative movement of the followers 80 together with the pistons 50 with respect to the cylinder 10 in the circumferential direction about the rotational axis L, while allowing relative movement of the followers 80 together with the pistons 50 with respect to the cylinder 10 in the rotational axis L direction.

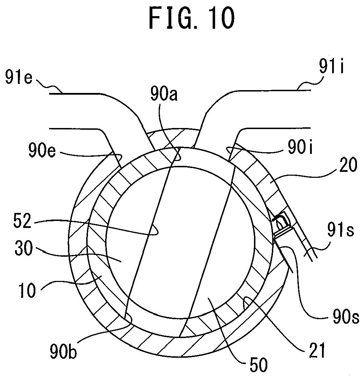

The rotary cylinder internal combustion engine 1 of the embodiment according to the present disclosure is further provided with a plurality of communication holes 90 formed in the circumferential surface of the cylinder 10 to be separated at equal intervals in the circumferential direction about the rotational axis L and to communicate with the combustion chamber 30. In the embodiment according to the present disclosure, the communication holes 90 comprise two communication holes 90a, 90b separated by 180 degrees in the circumferential direction about the rotational axis L (for example, see FIGS. 8 and 10). These communication holes 90a, 90b are aligned to each other in the rotational axis L direction, and are arranged on, for example, the symmetry plane P (for example, see FIGS. 8 and 9).

The rotary cylinder internal combustion engine 1 of the embodiment according to the present disclosure is further provided with a single intake hole 90i formed at the center part 22 of the outer circumferential member 20 (for example, see FIG. 10). The intake hole 90i is aligned with the communication holes 90a, 90b in the rotational axis L direction. Further, the intake hole 90i in the embodiment according to the present disclosure is formed in the outer circumferential member 20 so that the intake hole 90i communicates with the communication holes 90a, 90b when the rotational angle θ about the rotational axis L of the cylinder 10 is in a predetermined intake angle range IN. In the embodiment according to the present disclosure, as explained above, the outer circumferential surface 12 of the cylinder 10 slides against the inner circumferential surface 21 of the center part 22 of the outer circumferential member 20. For this reason, when the communication holes 90a, 90b face the inner circumferential surface 21 of the outer circumferential member 20, the communication holes 90a, 90b are closed by this inner circumferential surface 21, therefore the combustion chamber 30 is sealed. As opposed to this, when the cylinder 10 rotates about the rotational axis L to face the communication holes 90a, 90b with the intake hole 90i, the communication holes 90a, 90b communicate with the intake hole 90i, therefore the combustion chamber 30 communicates with the intake hole 90i through the communication holes 90a, 90b. An intake pipe 91i is connected with this intake hole 90i (for example, see FIGS. 6 and 10). For example, a fuel injector (not shown) for injecting fuel inside the intake pipe 91i, a throttle valve (not shown) for controlling the amount of intake flowing through the inside of the intake pipe 91i, etc. are arranged in the intake pipe 91i.

The rotary cylinder internal combustion engine 1 of the embodiment according to the present disclosure is further provided with a single exhaust hole 90e formed at the center part 22 of the outer circumferential member 20 (for example, see FIG. 10). The exhaust hole 90e is aligned with the communication holes 90a, 90b in the rotational axis L direction, and therefore is also aligned with the intake hole 90i. Further, the exhaust hole 90e of the embodiment according to the present disclosure is formed or positioned in the outer circumferential member 20 so that the exhaust hole 90e communicates with the communication holes 90a, 90b when the rotational angle θ of the cylinder 10 is within a predetermined exhaust angle range EX. When the cylinder 10 rotates about the rotational axis L to face the communication holes 90a, 90b with the exhaust hole 90e, the communication holes 90a, 90b communicate with the exhaust hole 90e, and therefore the combustion chamber 30 communicates with the exhaust hole 90e through the communication holes 90a, 90b. An exhaust pipe 91e is connected with this exhaust hole 90e (for example, see FIGS. 6 and 10). For example, a catalyst for purifying exhaust gas (not shown), etc. are arranged in the exhaust pipe 91e.

The rotary cylinder internal combustion engine 1 of the embodiment according to the present disclosure is further provided with a single spark plug housing hole 90s formed at the outer circumferential member 20 (for example, see FIG. 10). The spark plug housing hole 90s is aligned with the communication holes 90a, 90b in the rotational axis L direction, and therefore is also aligned with the intake hole 90i and exhaust hole 90e. A spark plug 91s is sealingly housed in spark plug housing hole 90s. The spark plug housing hole 90s of the embodiment according to the present disclosure is formed or positioned in the outer circumferential member 20 so that the spark plug 91s faces the communication holes 90a, 90b when the rotational angle θ of the cylinder 10 is in a predetermined ignition angle range SP.

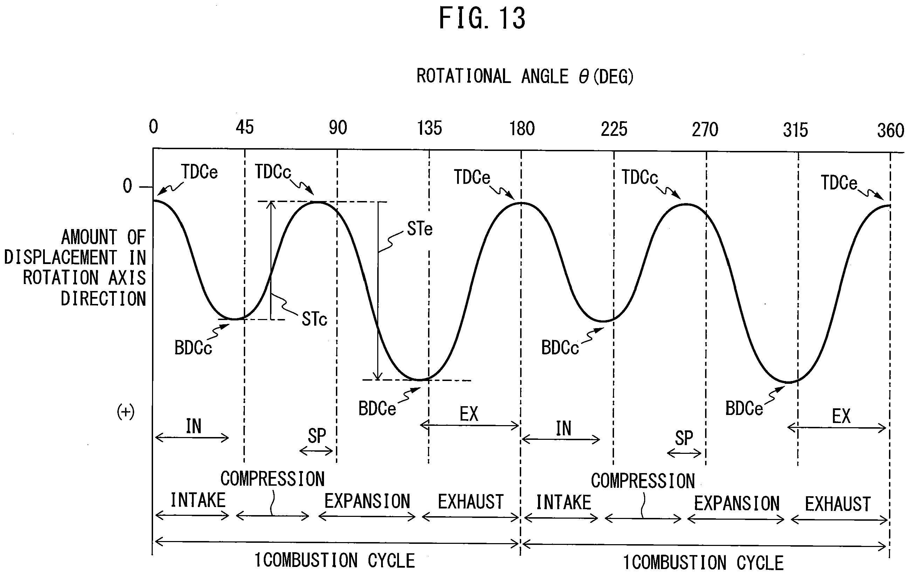

FIG. 13 shows behavior of the pistons 50 of the embodiment according to the present disclosure. In FIG. 13, the abscissa indicates the rotational angle θ of the cylinder 10 when referenced to a certain top dead center TDCe, while the ordinate indicates an amount of displacement in the rotational axis L direction of the top surfaces 51 of the pistons 50 when referenced to the symmetry plane P. As explained above, the pistons 50 move together with the followers 80 along the profiles of the cams 70. Therefore, the behavior of the pistons 50 shown in FIG. 13 shows the profiles of the cams 70. As will be understood from FIG. 13, the pistons 50 reciprocate in the rotational axis L direction as the cylinder 10 rotates about the rotational axis L.

As explained above, the rotary cylinder internal combustion engine 1 of the embodiment according to the present disclosure is a four-stroke engine. In a four-stroke engine, an intake stroke, compression stroke, expansion stroke, and exhaust stroke, which form one combustion cycle, are successively and repeatedly performed. In the embodiment according to the present disclosure, the intake stroke corresponds to a rotational angle range from a top dead center TDCe to a bottom dead center BDCc. The compression stroke corresponds to a rotational angle range from the bottom dead center BDCc to a top dead center TDCc. The expansion stroke corresponds to a rotational angle range from the top dead center TDCc to a bottom dead center BDCe. The exhaust stroke corresponds to a rotational angle range from the bottom dead center BDCe to the top dead center TDCe. Therefore, in the embodiment according to the present disclosure, the top dead center TDCe is an exhaust top dead center, the bottom dead center BDCc is a compression bottom dead center, the top dead center TDCc is a compression top dead center, and the bottom dead center BDCe is an exhaust bottom dead center.

Further, in the embodiment according to the present disclosure, if the cylinder 10 rotates 180 degrees about the rotational axis L, one combustion cycle is performed. In other words, the profiles of the cams 70 are formed so that every time the cylinder 10 rotates once about the rotational axis L, two combustion cycles are performed. Therefore, the profiles of the cams 70 corresponding to the rotational angle θ of the cylinder 10 of 0 to 180 degrees and the profile of the cam 70 corresponding to the rotational angle θ of the cylinder 10 of 180 to 360 degrees are identical to each other. In other words, positions of the pistons 50 or followers 80a, 80b in the rotational axis L direction at a certain rotational angle θ (0≤θ≤180 degrees) and positions of the pistons 50 or followers 80a, 80b in the rotational axis L direction at a rotational angle θ+180 degrees are identical to each other. Furthermore, in other words, in the embodiment according to the present disclosure, the profiles of the cams 70 are formed to have 180 degree symmetry about the rotational axis L. However, the profiles of the cams 70 of the embodiment according to the present disclosure does not have 90 degree symmetry about the rotational axis L.

Furthermore, in the embodiment according to the present disclosure, the above-mentioned intake angle range IN is set to a range from the exhaust top dead center TDCe to the compression bottom dead center BDCc, that is, the intake stroke (for example, see FIG. 13). In another embodiment (not shown), the intake angle range IN starts from a rotational angle θ of the cylinder 10 different from the exhaust top dead center TDCe. Further, in another embodiment (not shown), the intake angle range IN ends at a rotational angle θ of the cylinder 10 different from the compression bottom dead center BDCc. Further, in the embodiment according to the present disclosure, the exhaust angle range EX is set to a range from the exhaust bottom dead center BDCe to the exhaust top dead center TDCe, that is, the exhaust stroke (for example, see FIG. 13). In another embodiment (not shown), the exhaust angle range EX starts from a rotational angle θ of the cylinder 10 different from the exhaust bottom dead center BDCe. Further, in another embodiment (not shown), the exhaust angle range EX ends at a rotational angle θ of the cylinder 10 different from the exhaust top dead center TDCe.

In the embodiment according to the present disclosure, furthermore, the ignition angle range SP is set to a range around the compression top dead center TDCc (for example, see FIG. 13). In another embodiment (not shown), the ignition angle range SP is set to a rotational angle θ of the cylinder 10 different from one around the compression top dead center TDCc.

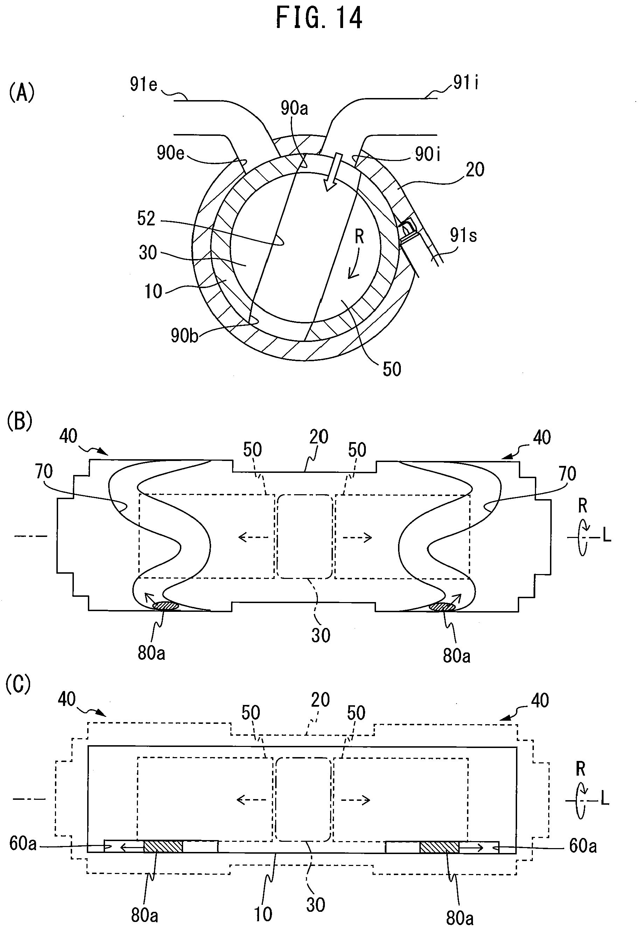

FIGS. 14(A), 14(B), and 14(C) schematically show the rotary cylinder internal combustion engine 1 of the embodiment according to the present disclosure in the intake stroke. In the intake stroke, the pistons 50, 50 move so as to separate from each other. As a result, the volume of the combustion chamber 30 increases. At this time, the communication holes 90a communicate with the intake hole 90i. As a result, intake gas (for example, an air-fuel mixture) flows from the intake pipe 91i to the combustion chamber 30.

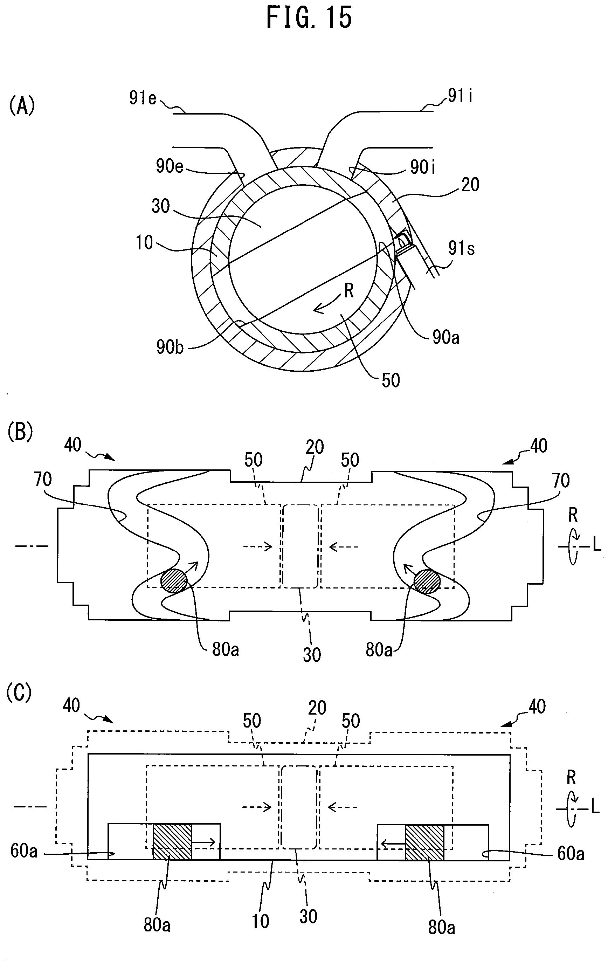

FIGS. 15(A), 15(B), and 15(C) schematically show the rotary cylinder internal combustion engine 1 of the embodiment according to the present disclosure in the compression stroke. In the compression stroke, the pistons 50, 50 move so as to approach each other. At this time, the communication holes 90a, 90b are closed and, therefore intake gas in the combustion chamber 30 is compressed.

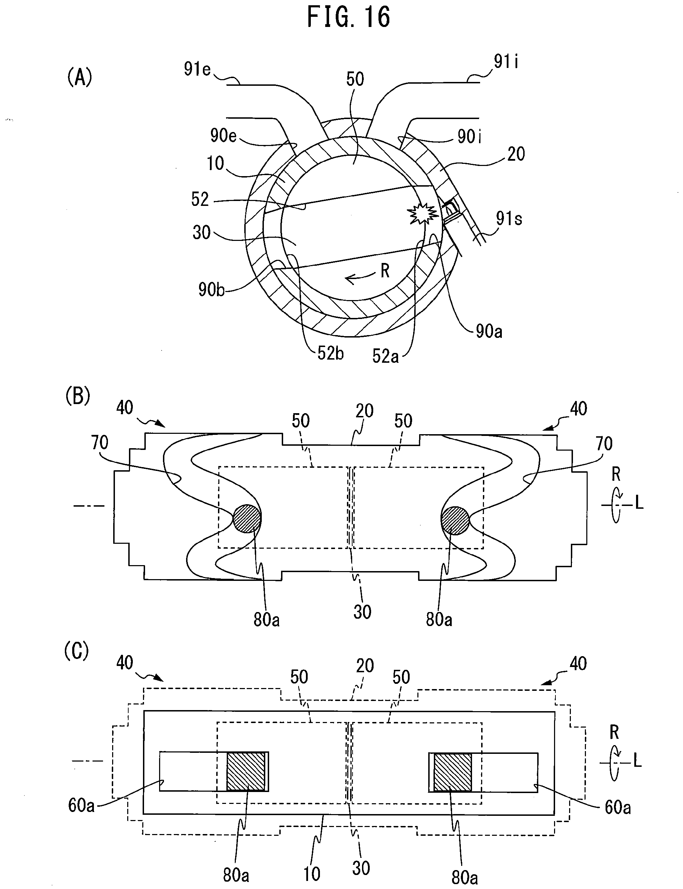

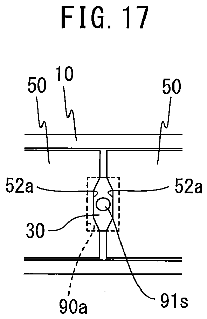

FIGS. 16(A), 16(B), and 16(C) schematically show the rotary cylinder internal combustion engine 1 of the embodiment according to the present disclosure when the rotational angle θ of the cylinder 10 is within the ignition angle range SP or around the compression top dead center TDCc. Around the compression top dead center TDCc where the ignition angle range SP is set, the combustion chamber 30 is mainly defined in the recessed parts 52, 52 of the facing pistons 50, 50. On the other hand, in the embodiment according to the present disclosure, the pistons 50, 50 are respectively formed so that when the rotational angle θ of the cylinder 10 is within the ignition angle range SP, the notches 52a, 52b of the pistons 50 face the communication holes 90a, 90b. As a result, when the rotational angle θ of the cylinder 10 reaches the ignition angle range SP, the spark plug 91s faces the combustion chamber 30 through the communication holes 90a and notches 52a or communication holes 90b and notches 52b (see FIGS. 16 and 17). At this time, an ignition action by the spark plug 91s is performed. As a result, the air-fuel mixture inside the combustion chamber 30 is ignited and burned.

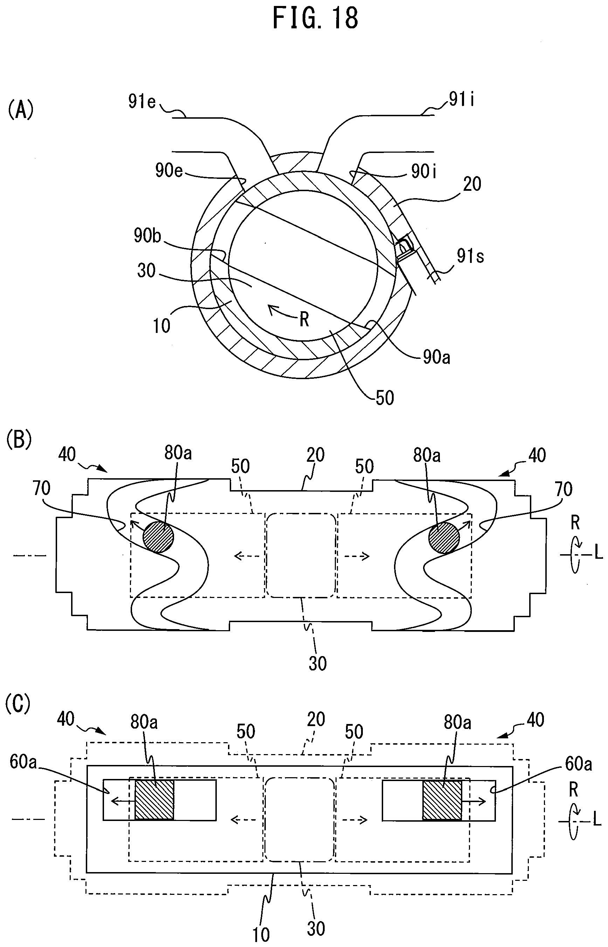

FIGS. 18(A), 18(B), and 18(C) schematically show the rotary cylinder internal combustion engine 1 of the embodiment according to the present disclosure in the expansion stroke. In the expansion stroke, the communication holes 90a, 90b are closed. Therefore, due to combustion, the pistons 50, 50 move to be separated from each other.

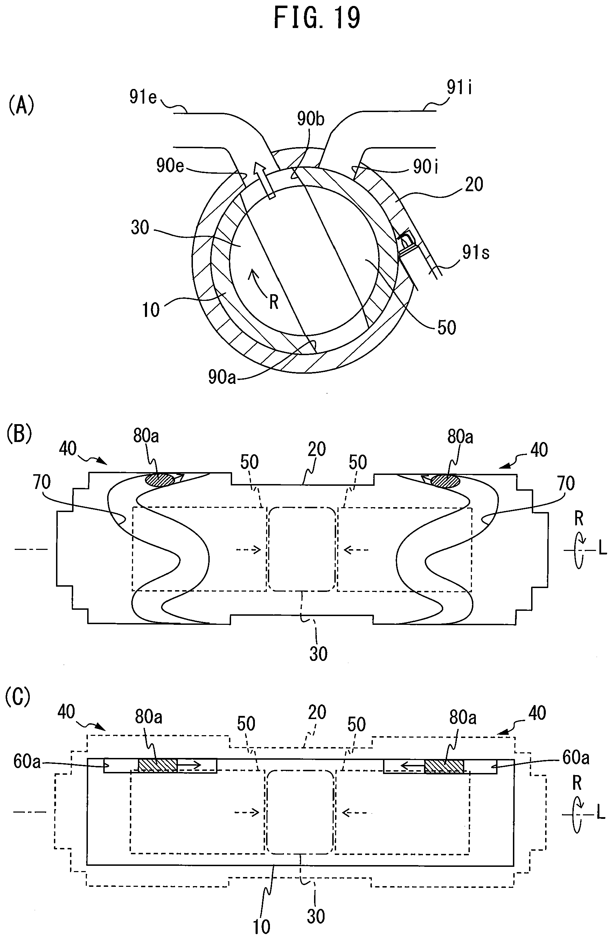

FIGS. 19(A), 19(B), and 19(C) schematically show the rotary cylinder internal combustion engine 1 of the embodiment according to the present disclosure in the exhaust stroke. In the exhaust stroke, the pistons 50, 50 move so as to approach each other. At this time, the communication hole 90b communicates with the exhaust hole 90e. As a result, exhaust gas flows from the combustion chamber 30 into the exhaust pipe 91e.

In the next combustion cycle, in the intake stroke, the intake hole 90i communicates with the communication hole 90b. Around the compression top dead center TDCc, the spark plug 91s faces the combustion chamber 30 through the communication hole 90b. In the exhaust stroke, the exhaust hole 90e communicates with the communication hole 90a.

Here, if referring to the number of combustion cycles performed each time the cylinder 10 rotates once about the rotational axis L as a "combustion cycle number", the combustion cycle number of the embodiment according to the present disclosure is set to 2 (for example, see FIG. 13). In another embodiment (not shown), the combustion cycle number is set to one or three or more. Further, in the embodiment according to the present disclosure, a single intake hole 90i, a single exhaust hole 90e, and a single spark plug housing hole 90s are provided and the communication holes of the same number as the combustion cycle number are provided separated at equal intervals in the circumferential direction about the rotational axis L. In another embodiment (not shown), the number of the intake holes is the same as the number of combustion cycles, the number of exhaust holes is the same as the number of combustion cycles, and number of the spark plug housing holes is the same as the number of combustion cycles and are provided separated at equal intervals in the circumferential direction about the rotational axis L and a single communication hole is provided.

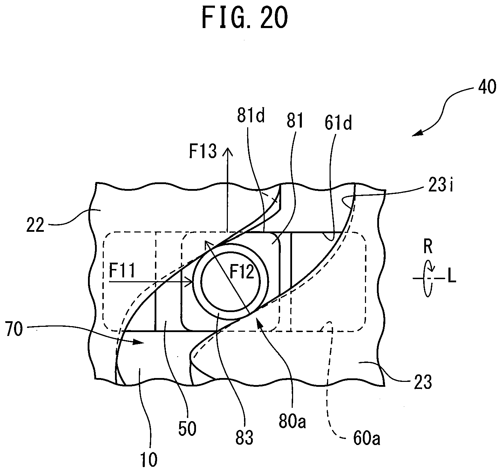

Next, while referring to FIG. 20 to FIG. 22, the rotary cylinder internal combustion engine 1 of the embodiment according to the present disclosure will be further explained. Note that FIG. 20 to FIG. 22 show the drive part 40 at the right side in FIG. 8 and FIG. 9, for example. Further, *outward in the rotational axis L direction* means a direction from a top dead center toward a bottom dead center, while *inward in the rotational axis L direction* means a direction from a bottom dead center toward a top dead center.

In the expansion stroke, as shown in FIG. 20, combustion performed in the combustion chamber 30 causes a force F11 outward in the rotational axis L direction to act on the piston 50 and the followers 80a, 80b integral with the same. As a result, a reaction force F12 in a direction vertical to the cam face 23i acts on the followers 80a, 80b through engagement between the rollers 83, 83 of the followers 80a, 80b and the cam face 23i of the cam 70. As a result, a force F13 in the circumferential direction about the rotational axis L acts on the cylinder 10 through engagement between the engaging surfaces 81d, 81d of the sliders 81, 81 of the followers 80a, 80b and the engaging surfaces 61d, 61d of the slots 60a, 60b of the cylinder 10. Therefore, the cylinder 10 is rotated in the circumferential direction R about the rotational axis L. That is, when combustion is performed in the combustion chamber 30, the piston 50 moves together with the followers 80a, 80b along the profile of the cam 70, to thereby rotate the cylinder 10 about the rotational axis L. In this way, movement of the piston 50 in the rotational axis L direction is converted to rotary motion about the rotational axis L. This rotary motion is taken out as engine output from the output shaft (not shown) coupled with the projecting part 13 of the cylinder 10 (for example, see FIGS. 12 to 14).

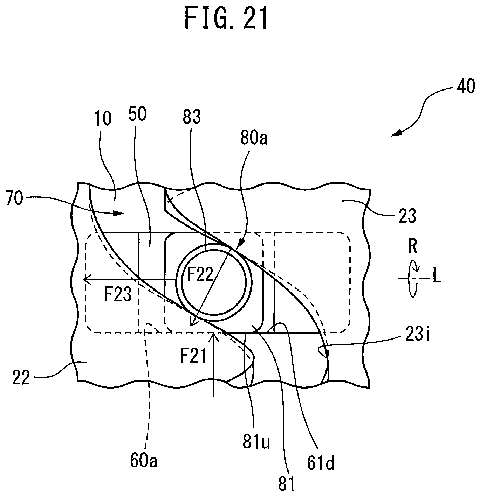

On the other hand, in the compression stroke and the exhaust stroke, as shown in FIG. 21, rotation of the cylinder 10 in the circumferential direction R about the rotational axis L causes a force F21 in the circumferential direction about the rotational axis L to act on the followers 80a, 80b through engagement between the engaging surfaces 61u, 61u of the slots 60a, 60b of the cylinder 10 and the engaging surfaces 81u of the sliders 81, 81 of the followers 80a, 80b. As a result, a reaction force F22 in a direction vertical to the cam face 23i acts on the followers 80a, 80b through engagement between the rollers 83, 83 of the followers 80a, 80b and the cam face 23i of the cam 70. As a result, a force F23 inward in the rotational axis L direction acts on the followers 80a, 80b and piston 50. Therefore, the piston 50 moves inward in the rotational axis L direction.

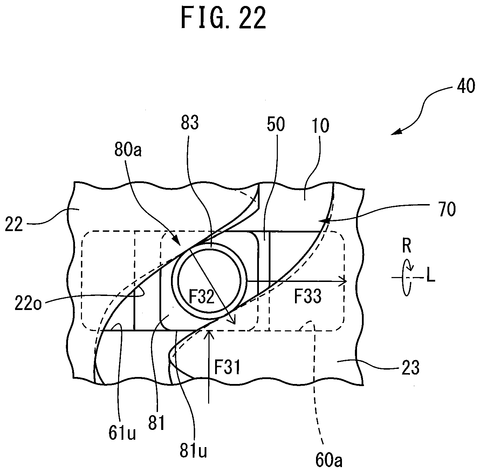

In the intake stroke, as shown in FIG. 22, rotation of the cylinder 10 in the circumferential direction R about the rotational axis L causes a force F31 in the circumferential direction about the rotational axis L to act on the followers 80a, 80b through engagement of the engaging surfaces 61u, 61u of the slots 60a, 60b of the cylinder 10 and the engaging surfaces 81u of the sliders 81, 81 of the followers 80a, 80b. As a result, a reaction force F32 in a direction vertical to the cam face 22o acts on the followers 80a, 80b through engagement between the rollers 83, 83 of the followers 80a, 80b and the cam face 22o of the cam 70. As a result, a force F33 outward in the rotational axis L direction acts on the followers 80a, 80b and piston 50. Therefore, the piston 50 moves outward in the rotational axis L direction.

In this way, in the embodiment according to the present disclosure, reciprocating motion of the piston 50 is converted to rotary motion without using a crank mechanism. Therefore, the rotary cylinder internal combustion engine 1 can be made more compact. Further, unlike a conventional internal combustion engine using a crank mechanism, no thrust force is generated at the piston. Furthermore, the cylinder 10 itself is rotated, so the number of parts is reduced.

Further, in the embodiment according to the present disclosure, as explained above, two drive parts 40, 40 and, therefore two pistons 50, 50, are provided. In addition, the profiles of the cams 70, 70 are formed so that phases of these pistons 50, 50 are synchronized to each other. As a result, in the intake stroke and expansion stroke, the pistons 50, 50 move to be separated from each other, while in the compression stroke and exhaust stroke, the pistons 50, 50 move so as to approach each other. Therefore, vibration due to the reciprocating motions of the pistons 50, 50 is cancelled out.

Referring again to FIG. 13, in the embodiment according to the present disclosure, the profiles of the cams 70, 70 are formed so that a stroke length STc from the compression bottom dead center BDCc to the compression top dead center TDCc is shorter than a stroke length STe from the compression top dead center TDCc to the exhaust bottom dead center BDCe. As a result, in the rotary cylinder internal combustion engine 1, a mirror cycle which has an expansion ratio larger than a compression ratio is realized. Therefore, the operating efficiency of the rotary cylinder internal combustion engine 1 is increased more.

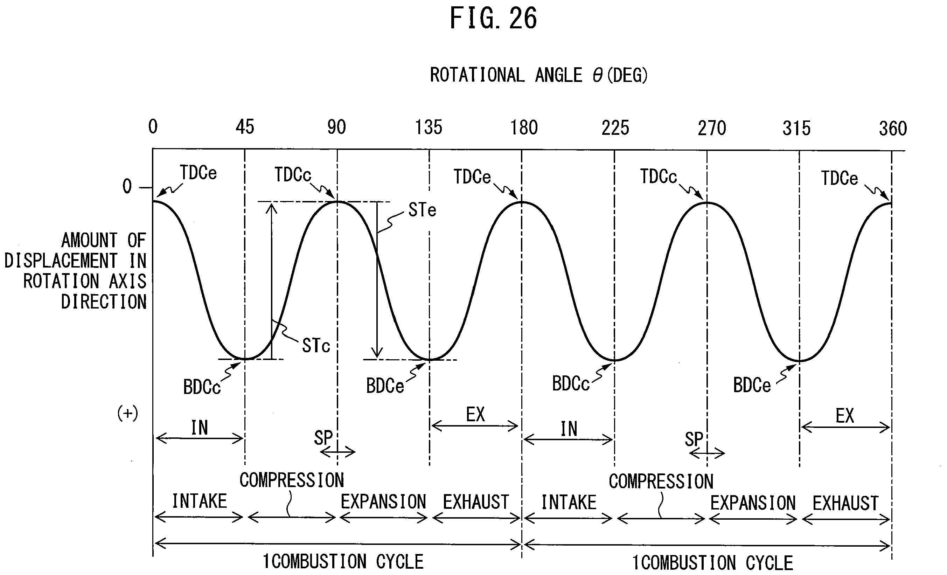

In an embodiment shown in FIG. 26, the profiles of the cams 70, 70 are formed so that the stroke length STc from the compression bottom dead center BDCc to the compression top dead center TDCc and the stroke length STe from the compression top dead center TDCc to the exhaust bottom dead center BDCe are equal to each other. In this case, in the rotary cylinder internal combustion engine 1, an Otto cycle which has an expansion ratio and a compression ratio equal to each other is realized.

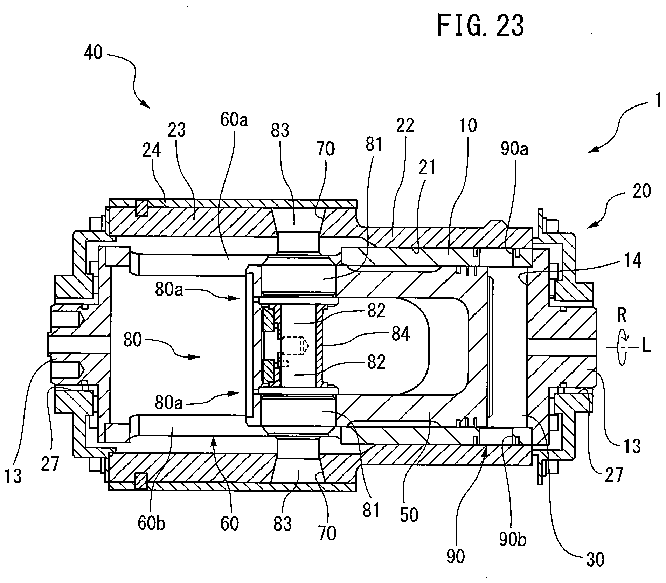

FIG. 23 shows a rotary cylinder internal combustion engine 1 of another embodiment according to the present disclosure. The rotary cylinder internal combustion engine 1 of the other embodiment differs in configuration from the rotary cylinder internal combustion engine 1 of the above-mentioned embodiment in that it is provided with a single drive part 40. In this case, the combustion chamber 30 is defined between the top surface of the piston 50 and the end face 14 in the rotational axis L direction of the cylinder 10. The rest of the configuration of the rotary cylinder internal combustion engine 1 of the other embodiment according to the present disclosure is similar to the configuration of the rotary cylinder internal combustion engine 1 of the above-mentioned embodiment according to the present disclosure, and therefore explanations therefor will be omitted.

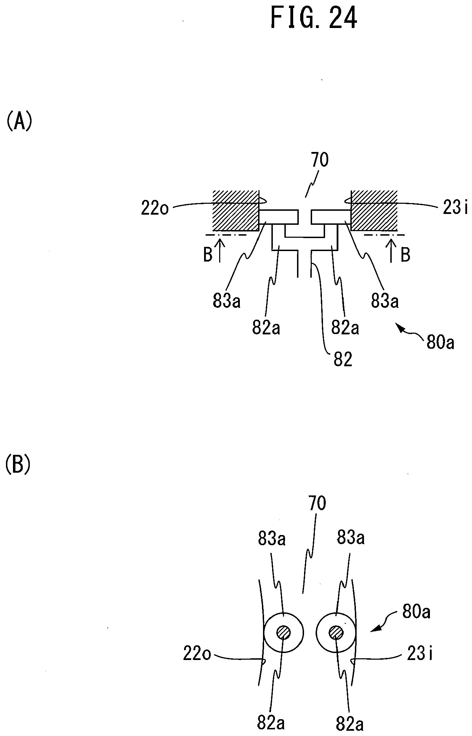

FIGS. 24(A) and 24(B) show another embodiment of the follower 80a. In the embodiment shown in FIGS. 24(A) and 24(B), the arm 82 of the follower 80a is provided with two branched parts 82a, 82a. The branched parts 82a, 82a respectively rotatably hold rollers 83a, 83a. One roller 83a engages with one cam face 22o of the cam 70, while the other roller 83a engages with the other cam face 23i.

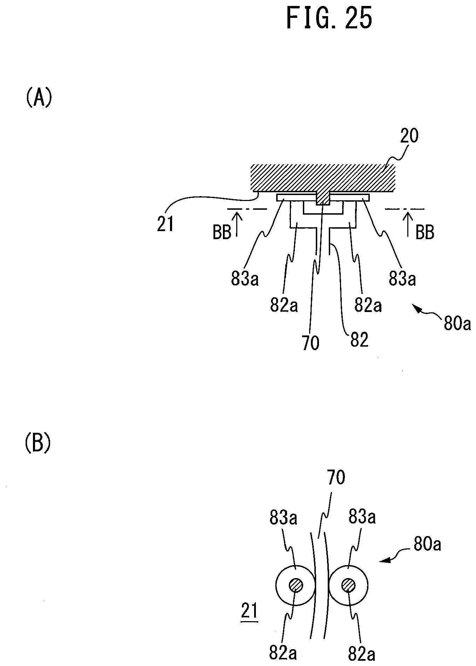

FIGS. 25(A) and 25(B) show another embodiment of the cam 70 and follower 80a. In the embodiment shown in FIGS. 25(A) and 25(B) as well, the arm 82 of the follower 80a is provided with two branched parts 82a, 82a. The branched parts 82a, 82a respectively rotatably hold rollers 83a, 83a. On the other hand, the cam 70 has a shape of a projection projecting out from the inner circumferential surface 21 of the outer circumferential member 20. Two side surfaces of this projection form cam faces. One roller 83a engages with one cam face of the cam 70, while the other roller 83a engages with the other cam face.

In the various embodiments according to the present disclosure explained above, fuel is injected from a fuel injector attached to the intake pipe 91i into the intake pipe 91i. In another embodiment according to the present disclosure (not shown), fuel is directly injected from the fuel injector attached to the outer circumferential member 20 into the combustion chamber 30. In this case, the fuel injector is housed in a fuel injector housing hole formed in the outer circumferential member 20, and is arranged on the inner circumferential surface 21 of the outer circumferential member 20 so as to face the communication holes 90a, 90b when the rotational angle of the cylinder 10 is within a predetermined injection angle range.

Further, in the various embodiments according to the present disclosure explained above, the profile of the cam 70 is formed to have 180 degree symmetry, without having 90 degree symmetry, in the circumferential direction about the rotational axis L. In another embodiment according to the present disclosure (not shown), the profile of the cam 70 is formed to have a predetermined angle symmetry in the circumferential direction about the rotational axis L. In one example, one example of the predetermined angle is 90 degrees. Furthermore, in another embodiment (not shown), the profile of the cam 70 is formed asymmetric in the circumferential direction about the rotational axis L.

On the other hand, in the various embodiments according to the present disclosure explained above, the drive part 40 is provided with two slots 60a, 60b. In another embodiment according to the present disclosure (not shown), the drive part 40 is provided with one or three or more slots 60.

Further, in the various embodiments according to the present disclosure explained above, the drive part 40 is provided with two followers 80a, 80b. In another embodiment according to the present disclosure (not shown), the drive part 40 is provided with one or three or more followers 80. Here, the number of followers 80 is the same as or smaller than the number of slots 60.

However, if the profile of the cam 70 has 180 degree symmetry about the rotational axis L, rather than 90 degree symmetry, one or two followers 80 are provided. If the profile of the cam 70 has 90 degree symmetry about the rotational axis L, one, two, or four followers 80 are provided. Therefore, expressed comprehensively, the profile of the cam 70 is formed to have a predetermined angle symmetry in the circumferential direction about the rotational axis L, and the follower 80 is comprised of a plurality of followers separated from each other at equal intervals in the circumferential direction about the rotational axis L, and the number of followers is determined according to the predetermined angle. Increasing of the number of followers 80 reduces or limits loads acting on the followers 80.

In another embodiment according to the present disclosure (not shown), the slider 81 of the follower 80 is omitted. In this case, for example, the arm 82 engages with the engaging surfaces 61u, 61d of the slot 60a. In still another embodiment according to the present disclosure (not shown), the roller 83 of the follower 80 is omitted. In this case, for example, the arm 82 engages with the cam surface of the cam 70.

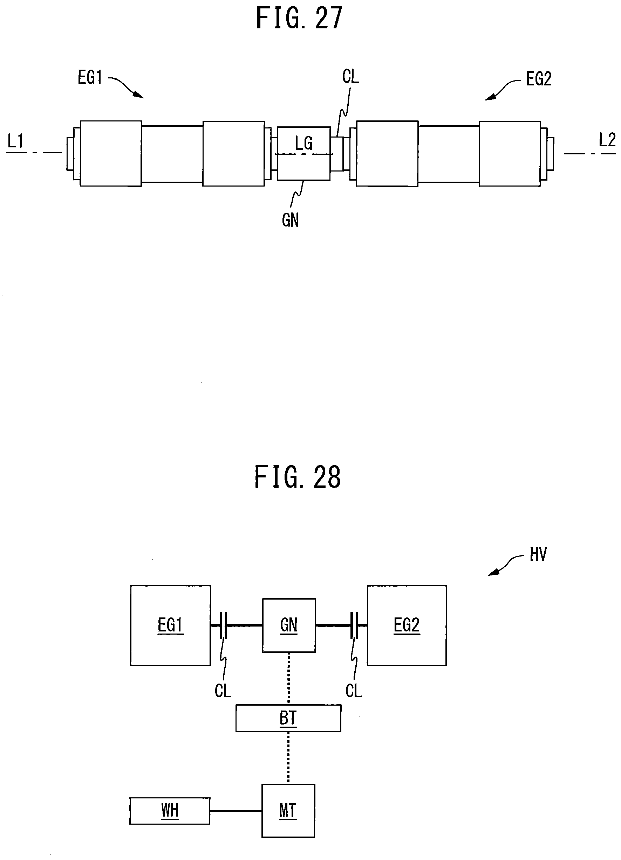

FIG. 27 shows an example of an arrangement of a plurality of internal combustion engines. In the example shown in FIG. 27, the plurality of internal combustion engines are comprised of the first internal combustion engine EG1 and the second internal combustion engine EG2. Further, the first internal combustion engine EG1 and the second internal combustion engine EG2 are respectively comprised of single-cylinder rotary cylinder internal combustion engines. Furthermore, the first internal combustion engine EG1 is arranged at one side of the generator GN, while the second internal combustion engine EG2 is arranged at the other side of the generator GN. In this case, the first internal combustion engine EG1 is arranged so that the rotational axis L1 of the first internal combustion engine EG1 matches the axis LG of the input shaft of the generator GN, while the second internal combustion engine EG2 is arranged so that the rotational axis L2 of the second internal combustion engine EG2 matches the axis LG of the input shaft of the generator GN. Therefore, the first internal combustion engine EG1 and the second internal combustion engine EG2 are arranged so that the rotational axis L1 of the first internal combustion engine EG1 and the rotational axis L2 of the second internal combustion engine EG2 match each other. This makes the hybrid vehicle HV more compact.

FIG. 28 to FIG. 32 show other examples of the hybrid vehicle HV. The example shown in FIG. 28 differs from the example of FIG. 1 on the point that the first internal combustion engine EG1 is coupled with the generator GN through an electromagnetic clutch CL. In the example shown in FIG. 28, for example, when the required engine output is relatively small, an operation of the second internal combustion engine EG2 is stopped while the first internal combustion engine EG1 is operated. When the required engine output is relatively large, both the first internal combustion engine EG1 and the second internal combustion engine EG2 are operated. When the required engine output is the medium extent, an operation of the first internal combustion engine EG1 is stopped while the second internal combustion engine EG2 is operated. That is, patterns of internal combustion engines to be operated increase, and thus it is possible to control engine operation in more detail.

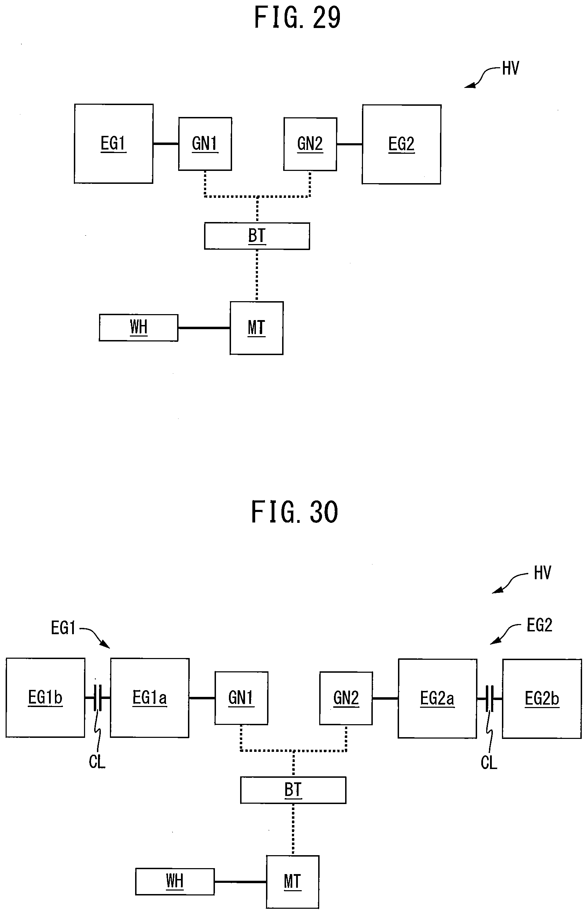

The example shown in FIG. 29 differs from the example of FIG. 1 on the point that the first internal combustion engine EG1 and the second internal combustion engine EG2 are respectively connected to the first generator GN1 and the second generator GN2. This increases a degree of freedom in mounting the first internal combustion engine EG1 and the second internal combustion engine EG2 as well as the first generator GN1 and the second generator GN2.

The example shown in FIG. 30 differs from the example of FIG. 29 on the point that the first internal combustion engine EG1 is provided with a plurality of internal combustion engines EG1a, EG1b coupled to each other by an electromagnetic clutch CL and that the second internal combustion engine EG2 is provided with a plurality of internal combustion engines EG2a, EG2b coupled to each other by an electromagnetic clutch CL. In the example shown in FIG. 30 as well, the patterns of internal combustion engines to be operated increase, and thus it is possible to control engine operation in more detail.

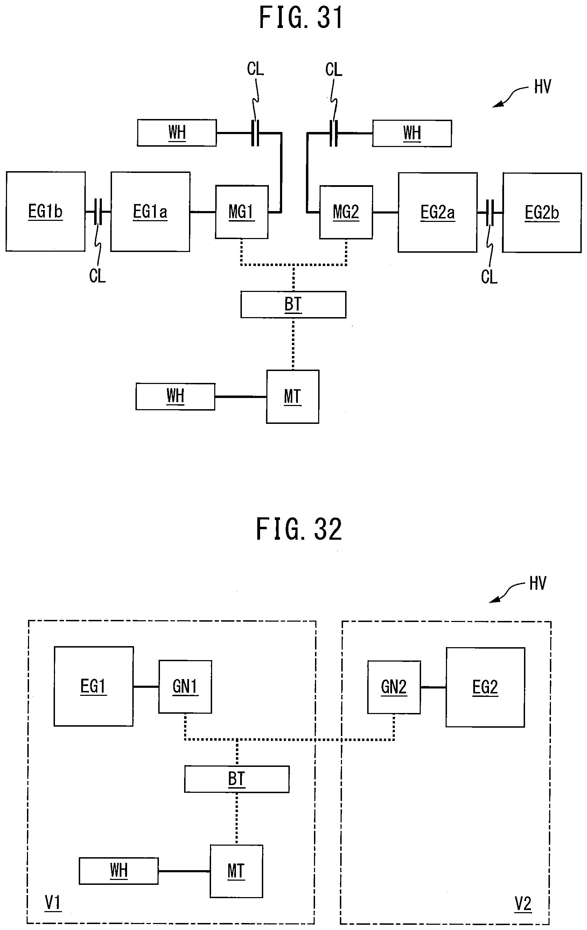

The example shown in FIG. 31 differs from the example of FIG. 30 on the point that the output shaft of the first internal combustion engine EG1 is coupled with an input shaft of a first motor-generator MG1, the output shaft of the second internal combustion engine EG2 is coupled with an input shaft of a second motor-generator MG2, and an output shaft of the first motor-generator MG1 and an output shaft of the second motor-generator MG2 are respectively coupled with a vehicle wheels WH through electromagnetic clutches CL. Note that, in this example, when the first motor-generator MG1 and the second motor-generator MG2 operate as electric motors, electric power is received from the battery BT. In another example (not shown), for example, in the example shown in FIG. 31, the output of the first internal combustion engine EG1 is transmitted to one or both of the first generator GN1 and the vehicle wheels WH, while the output of the second internal combustion engine EG2 is transmitted to one or both of the second generator GN2 and the vehicle wheels WH. That is, in these examples, the vehicle wheels WH are driven by not only the electric motor MT, but also the motor-generators MG1, MG2 or generators GN1, GN2. In other words, the hybrid vehicle HV is not limited to a series hybrid vehicle.

The example shown in FIG. 32 differs from the example of FIG. 29 on the point that the hybrid vehicle HV includes a first vehicle V1 and a second vehicle V2. which can be connected to each other by, for example, towing, and that part of components of the hybrid vehicle HV (for example, the second internal combustion engine EG2 and the second generator GN2) are mounted in the second vehicle V2, while the remaining components of the hybrid vehicle HV are mounted in the first vehicle V1. When the required output of the hybrid vehicle HV is believed to be relatively small, the second vehicle V2 can be separated from the first vehicle V1 to thereby make the hybrid vehicle HV light in weight and raise the efficiency more. On the other hand, when the required output of the hybrid vehicle HV is believed to be relatively large, the second vehicle V2 can be joined with the first vehicle V1 to thereby secure the required engine output.

### REFERENCE SIGNS LIST

HV hybrid vehicle
MT electric motor
GN electrical generator
EG1 first internal combustion engine
EG2 second internal combustion engine
1 rotary cylinder internal combustion engine
10 cylinder
20 outer circumferential member
30 combustion chamber
40 drive part
50 piston
60 slot
70 cam
80 follower
L rotational axis

## Claims

1. A hybrid vehicle comprising:
an electric motor for generating vehicle drive force;
an electrical generator for generating electric power to be supplied to the electric motor;
a plurality of internal combustion engines for driving the generator, the plurality of internal combustion engines differing in output characteristics; and
a controller configured to select one or more internal combustion engines from the plurality of internal combustion engines so that, when operating the selected one or more internal combustion engines in respective high efficiency regions thereof, an engine output satisfies a required engine output and an engine operating efficiency is maximum, and to operate the selected one or more internal combustion engines in the respective high efficiency regions thereof.

2. The hybrid vehicle according to claim 1,
wherein the plurality of internal combustion engines include a first internal combustion engine and a second internal combustion engine,
wherein the output characteristics of the first internal combustion engine and the output characteristics of the second internal combustion engine are respectively set so that, when operating the first internal combustion engine and the second internal combustion engine in their respective high efficiency regions, the output of the first internal combustion engine is lower than the output of the second internal combustion engine and the operating efficiency of the first internal combustion engine is higher than the operating efficiency of the second internal combustion engine, and
wherein the controller is configured to
operate the first internal combustion engine while stopping an operation of the second internal combustion engine if the required engine output is lower than the output of the first internal combustion engine obtained when operating the first internal combustion in its high efficiency region, and
operate both of the first internal combustion engine and the second internal combustion engine or operate the second internal combustion engine while stopping an operation of the first internal combustion engine if the required engine output is higher than the output of the first internal combustion engine obtained when operating the first internal combustion engine in its high efficiency region.

3. The hybrid vehicle according to claim 1 or 2, wherein the plurality of internal combustion engines include an internal combustion engine configured to perform a mirror cycle and an internal combustion engine configured to perform an Otto cycle.

4. The hybrid vehicle according to claim 1 or 2, wherein the plurality of internal combustion engines include an internal combustion engine configured to perform HCCI combustion and an internal combustion engine configured to perform SI combustion.

5. The hybrid vehicle according to claim 1 or 2, wherein the plurality of internal combustion engines include an internal combustion engine configured to perform PCCI combustion and an internal combustion engine configured to perform CI combustion.

6. The hybrid vehicle according to any one of claims 1 to 5, wherein the plurality of internal combustion engines include a single cylinder internal combustion engine.

7. The hybrid vehicle according to any one of claims 1 to 6,
wherein the plurality of internal combustion engines include a rotary cylinder internal combustion engine, the rotary cylinder internal combustion comprising:
a cylinder able to rotate about a rotational axis;
a combustion chamber defined in the cylinder; and
a drive part, the drive part comprising:
a piston housed in the cylinder to be able to slide in a direction of the rotational axis and defining the combustion chamber;
a slot formed in a circumferential surface of the cylinder at an opposite side to the combustion chamber relative to the piston;
a cam stationarily set around the slot, which cam has a profile oscillating in a direction of the rotational axis while being annular in a circumferential direction of the rotational axis; and
a follower extending from the piston through the slot to the cam, and configured to move together with the piston along the profile of the cam,
wherein the slot is configured to limit relative movement of the follower together with the piston with respect to the cylinder in the circumferential direction of the rotational axis, while allowing relative movement of the follower together with the piston with respect to the cylinder in a direction of the rotational axis,
wherein combustion performed in the combustion chamber moves the piston together with the follower along the profile of the cam to thereby rotate the cylinder about the rotational axis, and
wherein the rotation of the cylinder is taken out as the engine output.

8. The hybrid vehicle according to claim 7,
wherein the drive part comprises two drive parts arranged along the rotational axis,
wherein the combustion chamber is defined in the cylinder between the pistons of the two drive parts, and
wherein the profiles of the cams of the drive parts are formed so that the pistons of the two drive parts are synchronized to each other.

9. The hybrid vehicle according to claim 7 or 8, wherein the plurality of internal combustion engines include:
the rotary cylinder internal combustion engine where profiles of the cams are formed so that a stroke length from compression bottom dead center to compression top dead center is shorter than a stroke length from compression top dead center to exhaust bottom dead center; and
the rotary cylinder internal combustion engine where profiles of the cams are formed so that a stroke length from compression bottom dead center to compression top dead center and a stroke length from compression top dead center to exhaust bottom dead center is substantially equal.

10. The hybrid vehicle according to any one of claims 7 to 9,
wherein the plurality of internal combustion engines include two internal combustion engines,
wherein the two internal combustion engines are the rotary cylinder internal combustion engines having respective single cylinders, and
wherein the two rotary cylinder internal combustion engines are arranged at the two sides of the generator so that the rotational axes thereof match each other.
